# EUROPEAN PATENT SPECIFICATION

(11) **EP 0 863 452 B1**
(45) Date of publication and mention of the grant of the patent: **28.01.2004**
(21) Application number: 98301416.8
(22) Date of filing: 26.02.1998
(51) Int. Cl.: G05F 1/70, H02M 5/443, H02J 3/18, H02P 7/295, H02M 1/084

(54) **Power supply circuits**
Stromversorgungseinheit
Bloc d'alimentation

(30) Priority: 07.03.1997 GB 9704810
(43) Date of publication of application: 09.09.1998
(73) Proprietor: CEGELEC CONTROLS LTD., Rugby Warwickshire CV21 1BU (GB)
(72) Inventor: Lewis, Eric Anthony, Rugby, Warwickshire, CV22 6JJ (GB)
(74) Representative: Dargavel, Laurence Peter

(56) References cited:
- EP-A- 0 278 491
- US-A- 4 686 447
- US-A- 4 752 726
- US-A- 4 903 184

## Description

This invention relates to power supply circuits.

The invention particularly relates to power supply circuits for industrial loads eg. mine winder motors or mine ventilation fans powered by power converters which use semiconductors to switch the AC supply.

The power converter, typically using thyristors, permits the voltage applied to the motor to be varied by switching the thyristors on and off at different points along the waveform ie. at different phase angles.

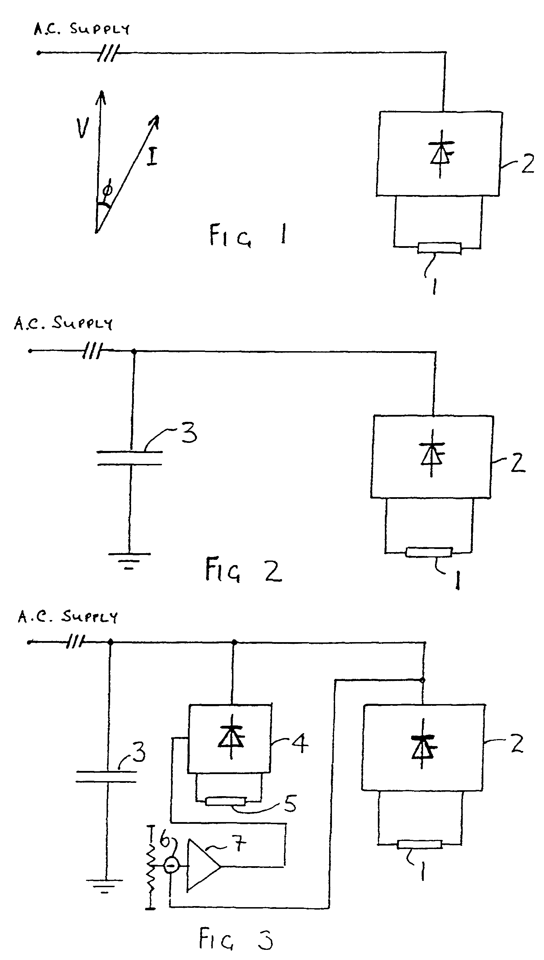

For example, referring to Figure 1, a load 1 supplied by a thyristor-switched power converter 2 may be supplied by all three phases of an AC supply system. When the power is being received by the load, the alternating current I lags the alternating voltage V by an increasing phase angle φ (the cosine of which is the so-called power factor).

The alternating current I can be resolved into two components, in-phase and quadrature with the alternating voltage V. The real power which is dissipated in the load depends only on the in-phase component of the current I cos φ. The reactive power depends on the quadrature component of the current I sin φ.

It will be apparent that to produce a given real power output, a larger I is needed the greater the phase angle φ. Consequently, a large power factor is undesirable because the cabling and switches from the AC terminals have to be designed to handle a larger current then would be necessary from the point of view of the real power dissipated.

For the same reason of increased cabling and switching costs from the power station to the user's supply terminals, industrial premises are often provided with two meters, one for recording the real power consumed, the other for measuring the maximum reactive power, and there is a penalty related to the size of the reactive power.

Attempts have therefore been made to improve the power factor (cos φ) as much as possible. Referring to Figure 2, since alternating current through a capacitor leads alternating voltage applied between the plates, a capacitor 3 can be connected to the AC supply system to balance the quadrature component of the current generated by the power converter 2. While both the power converter and the capacitor will be responsible for generating reactive power, the sign of the quadrature component of current will be opposite, and the power factor can be improved or made to equal unity in this way, so that the AC supply system behaves as if only a real load was connected.

One by-product of this is that the so-called "voltage dip", a reduction in the alternating voltage applied to the switched power converter, is reduced. This voltage dip is proportional to the product of the inductance of the supply cables between the AC supply terminals and the power converter, and the net quadrature component of the alternating current.

Of course, a fixed capacitor such as is shown in Figure 2 can only cancel one particular value of reactive power eg. one particular load on a motor. For this reason, a bank of capacitors has been used, so that various motor loads can be compensated for, or more closely approximated to. Such a capacitor bank is often also configured to absorb harmonic currents as well as providing leading reactive power. The problem with a bank of capacitors is that the desired cancellation can only be approximated to because of the switching in steps, and also that undesirable power surges may be caused when the capacitors are switched in or out.

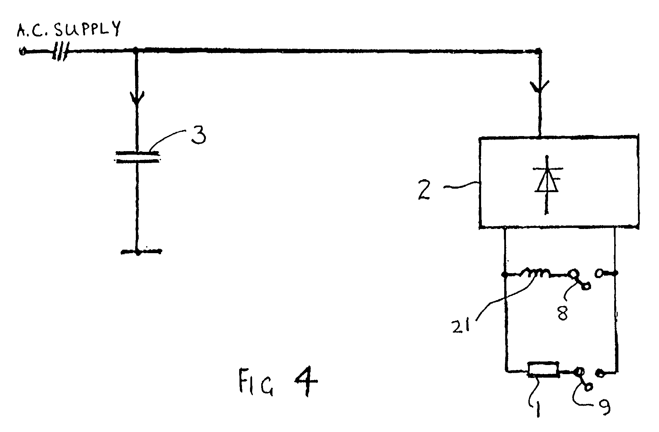

To overcome the problems with the arrangement of Figure 2, the Applicants have previously proposed the reactive power compensation circuit of Figure 3, which shows in simplified form the arrangement of GB-A-2 167 582. In this circuit, whatever variations in reactive power take place in the power converter 2, due to eg. operating a load formed by a motor at different powers, complementary variations in reactive power take place in a second power converter 4 connected to a load 5 which is reactive and has no real power component. In this way, the total lagging reactive power generated by both power converters 2 and 4 is constrained to be a constant. equal to the leading reactive power generated by a fixed capacitor 3. This is accomplished by means of a feedback circuit. A DC signal representative of the net reactive power generated by the power converter 2 is fed back to subtractor 6 where the signal is subtracted from a fixed reference signal. Loop amplifier 7 varies the phase angle of power converter 4 to maintain the net lagging reactive power of convertors 2 and 4 at a fixed value corresponding to the reference signal fed to subtractor 6. This reference signal is chosen so that the fixed value of net lagging reactive power of convertors 2 and 4 is equal to the fixed value of leading reactive power generated by the capacitor.

Patent No. US 4,752,726 discloses a reactive power compensation device in which a second power converter acting as a second reactive power compensation circuit is used to minimise detected total reactive power in a load and a first power converter acting as a first reactive power compensation circuit.

There may be circumstances where the power drawn by the load 1 does not vary much in use, and for cost reasons the simple system of Figure 2 can be reverted to. The capacitor is chosen to balance the typical lagging reactive power produced in use of the load, and the cabling, switches, voltage dip and surcharge costs dependant upon the power factor do not cause a problem.

There is one additional drawback with this cheaper option, however, and this is that, when the load 1 is switched off, the capacitor will continue to draw leading reactive power, and the voltage rise produced as well as the increased tariff costs could now cause a problem.

The invention provides a power supply circuit for a load, comprising a power converter connected in series between an AC supply and the load, the converter having semiconductors to switch the AC supply at various phase angles, thereby to supply power to a load, a capacitance connected to the AC supply to generate leading reactive power to counteract the lagging reactive power generated by the power converter when the load is powered, and an inductance selectively connectable across the output of the power converter in parallel with the load to generate lagging reactive power to counteract the leading reactive power generated when the load is not powered.

The provision of the inductance enables the leading reactive power generated by the capacitive means to be reduced or eliminated, while still using a single power converter.

The power converter, which uses semiconductor devices, may convert AC to DC, AC at one frequency to AC at a different frequency, or AC to DC and back to AC.

The invention will now be described, by way of example, with reference to the accompanying drawings, in which:
Figure 1 shows a known, basic, power supply circuit in which reactive power generated in a power converter is not compensated for;
Figure 2 shows a known, basic, power supply circuit in which reactive power generated in a power converter is compensated for when the current in the load does not change over a wide range;
Figure 3 shows a known, power supply circuit in which reactive power generated in a power converter is compensated for when the current in the load can change over a wide range;
Figure 4 shows a first power supply circuit in accordance with the invention;
Figure 5 shows one embodiment of the power converter of the power supply circuit of Figure 4;
Figure 6 shows a second power supply circuit in accordance with the invention; and
Figure 7 shows a third power supply circuit in accordance with the invention.

Referring to Figure 4, a load 1, which may be a DC motor, is powered by a power converter 2, which converts AC to DC.

The current flowing in the load 1, in the case of a DC motor, causes the motor to produce torque and vary speed. In many circumstances, where a DC motor is used, the current passing through the motor does not change over a wide range in use of the motor. For example, in the case of a mine ventilation fan, the current may typically vary by only 20% per phase, as the air flow is varied.

In these circumstances, the reactive power compensating the circuit of Figure 3, which entails the use of an extra power converter 4, is not called for, and the simpler system similar to Figure 2 may be used. where a fixed capacitor bank 3 is provided.

Given that the current passing through the load does not change over a wide range, since the variation of the current is produced by switching of thyristors in the power converter 2 at different phase angles, the power factor of the power converter does not change over a wide range. In fact the power converter generates a lagging reactive power, and it is therefore possible to compensate this by a fixed capacitor 3. Clearly while the current is varying to some extent, the power factor will also vary to some extent, and the compensation will not be exact. Nevertheless, it may be sufficiently good for the current to be taken by the cabling and the switches provided between the AC supply terminals and the power converter, and the power factor penalty as measured by the metres on the premises may be acceptable.

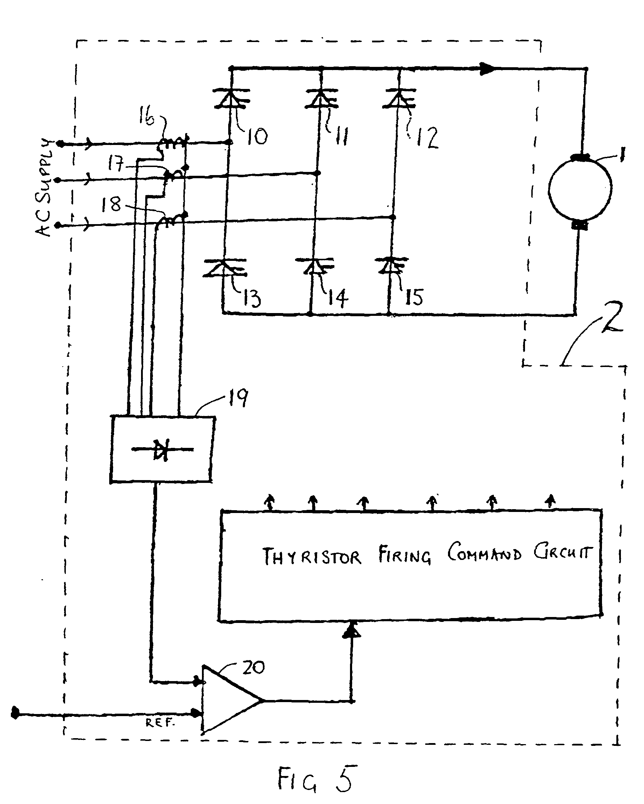

Referring to Figure 5, the power converter 2 will be explained in more detail. As illustrated the power converter is a six pulse thyristor converter, the thyristors being indicated 10-15. These are fired in turn by the thyristor firing command circuit in order to vary the DC current flowing through the load which is illustrated as a motor in Figure 5. The firing of the thyristors is varied so they fire at different points along the waveform of the AC signal ie. at different phase angles, in order to vary the AC voltage across the motor. In varying the firing points of the thyristors, the phase angle of the power converter 2 is varied, but in the power converter of the invention the variation is kept within limits.

The control circuitry operates by sensing the current drawn from the AC supply system by means of AC current transformers (ACCTs) 16-18 and using the signals rectified by a diode bridge rectifier 19 as a variable input to an amplifier 20, the output of which feeds an error signal dependent on the difference between this variable signal and a fixed reference signal, to the thyristor firing command circuit to vary the phase angle of the firings of the thyristors.

In normal operation of the power converter, the reference signal is varied to produce varying DC currents through the motor and hence varying torque. Within the limits of variation of the DC current, there will be corresponding limits in the power factor of the power converter, and hence a corresponding quadrature component of AC current being drawn by the converter and corresponding limits of lagging reactive power generated by the converter. The capacitor 3 is chosen to produce a leading reactive power equal to the median of the range of the lagging reactive power.

A problem with such a power supply circuit is that when the load is disconnected by opening of the switch 9 eg. in the case of a motor, when the motor is stopped for any reason, then the lagging reactive power drawn by the power converter 2 falls to zero, but the leading reactive power of the capacitor 3 stays the same. The capacitor 3 could be switched off, but this may be technically difficult due to capacitor in-rush currents when the capacitors are again required to be used.

In accordance with the invention, after the switch 9 is opened, switch 8 is closed and a reactor in the form of an inductor 21 is connected to the output of the power converter. Because the component 21 is a reactive component only, no power will be dissipated in it, and the only effect will be to generate lagging reactive power in the AC supply. When the switch 8 is closed, the reference signal at the error amplifier 20 is set to a value which, taking account of the difference in inductance between the reactor 21 and the generally inductive impedance of the motor 1, the current in the reactor is such that the lagging reactive power generated by the power converter is approximately equal to the leading reactive power generated by the capacitor 3. The reference signal is set on site with switch 9 open and switch 8 closed to obtain unity power factor.

The provision of the reactor 21 therefore enables the motor or other load 1 to be switched off without suffering from the disadvantageous effects of leading reactive power drawn by the capacitor 3.

There are two main methods of operating the power supply circuit. In the first method as soon as the DC motor stops, switch 9 is opened and switch 8 is closed. This minimises AC supply voltage rises to the minimum time of changing the switches. The second method is to dwell for a little time in the condition in which both switches are open ie. when the motor stops, switch 9 is opened and a time elapses before switch 8 is closed (see table following). This can be used to control the time average sum of the quadrature reactive power to make it near zero.

As an example, the following table indicates the sum of the reactive power. In the table, mode 1 represents switch 9 closed and the motor on. Mode 2 represents switch 8 closed and the reactor on and mode 3 represents switches 8 and 9 both open. It is assumed that the DC motor/converter takes a current equal to 10 MVARS while in mode 2 the reactor/converter takes a current equal to 5 MVARS and the capacitor bank is equal to 5 MVARS (leading). The following sequence could occur in which the motor runs for 10 minutes and then stops.

| Time mins | Converter mode | Convener 2 MVARS | Capacitor 3 MVARS | Net Current MVARS | Net MVARS minutes Total sum |
|---|---|---|---|---|---|
| 0 | Mode 1 DC Motor on | + 10 | -5 | +5 | 0 |
| 5 | Mode 1 DC Motor on | +10 | -5 | +5 | + 25 |
| 10 | Mode 1 DC Motor on | +10 | -5 | +5 | +50 |
| 10 | Mode 3 All off | 0 | -5 | -5 | +50 |
| 15 | Mode 3 All off | 0 | -5 | -5 | + 25 |
| 20 | Mode 3 All off | 0 | -5 | -5 | 0 |
| 20 | Mode 2 Reactor on | +5 | -5 | 0 | 0 |
| 25 | Mode 2 Reactor on | +5 | -5 | 0 | 0 |
| 30 | Mode 2 Reactor on | +5 | -5 | 0 | 0 |

This shows how the reactor can be selected (mode 2) at T = 20 minutes to bring the average MVAR demand to zero and then hold it at zero. This mode can be used to optimise the electricity cost charge by a supply authority. In this example, the exact switching between modes is not critical as to the times at which it occurs.

Of course modifications are possible without departing from the scope of the invention.

The power converter does not have to be a six pulse converter, but could be a twelve or twenty-four pulse design, and may use AC supply transformers eg. to step down a supply voltage eg. 33KV to that required by the converter and motor eg. 1KV. Equally, for certain DC motor systems, it may be possible to omit switch 9 and only use switch 8. This could occur if the impedance of the reactor 21 was much lower than the impedance of the motor. Then, when switch 8 was closed, most current would flow in the inductor with a small and insignificant current in the DC motor.

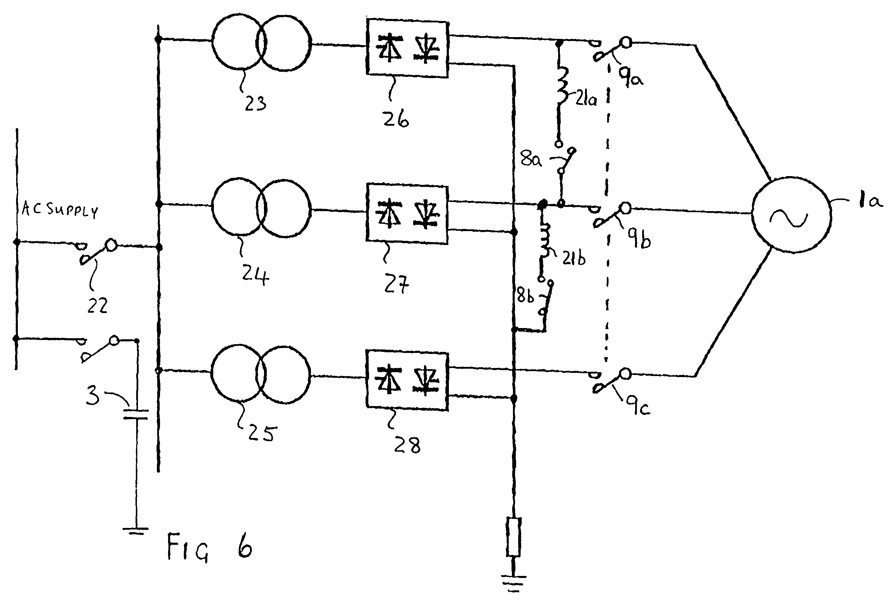

Further, the power converter need not convert AC to DC, but it could convert AC at one frequency to AC at another frequency. Thus, in Figure 6, a cyclo-converter is used as the power converter. AC supply system is connected via AC circuit breaker 22 to transformers 23-25 on each phase of the AC supply system. The outputs of the transformers are connected to thyristor bridges 26-28, and the time of firing of the thyristors can be varied in order to vary the magnitude and the frequency of the AC current which drives the AC motor 1a. An AC circuit breaker is also provided for the capacitor 3 in order that the power converter and the capacitor need not be switched on simultaneously, which could cause a large in-rush current.

The operation is the same as for the first power supply circuit, except that the inductor 21 of Figure 4 is replaced either by the inductor 21a or by the inductor 21b of Figure 6. When the switches 9a-9c are opened when the motor is stopped, then the switch 8a or the switch 8b can be closed as appropriate in order to generate lagging reactive power to counteract the leading reactive power of the capacitor 3.

The circuit of Figure 6 applies to all types of cyclo-converter circuits eg. six pulse, twelve pulse, eighteen pulse.

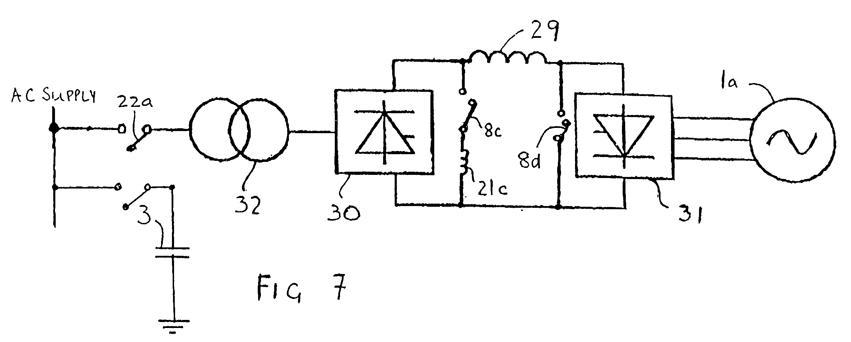

The invention is also applicable to LCI drives (Load Commutated Inverters) as shown in Figure 7, where again an AC motor 1a is driven. The AC supply system is connected via an AC circuit breaker 22a and a step down transformer 32 to the supply thyristors 30 (which convert AC to DC) and motor thyristors 31 (which inverter converts DC to AC). The LCI drive, also employs an inductor 29 to smooth the DC current flowing between 30 and 31. An AC circuit breaker is also provided for the capacitor 3 for the same reason as in the cyclo-converter of Figure 6.

In accordance with the invention, either inductor 21c together with switch 8c are provided, or switch 8d is provided.

The operation is the same as Figure 4, in that when the motor 1a is stopped, either contact 8c is closed, so that inductor 21c generates lagging reactive power to counteract the leading reactive power of the capacitor 3, or contact 8d is closed, so that lagging power is generated using the inductor 29 already provided in the LCI drive.

In the second and third form of power supply circuit, a feedback system using an error amplifier similar to the one shown in Figure 5 is used, with the reference setting of the error amplifier at the reference being such as to cause cancellation of the leading reactive power of the capacitor 3.

Typical DC motors for the first power supply are rated at up to 1000VAC at 10MW. Typical AC motors for the cyclo-converter are rated at up to 20Hz at up to 50MW, and for the LCI drive up to 300Hz at up to 100MW. Typical AC supplies for the power converters of the invention are from 440VAC to 66KV, 50 or 60Hz.

The power supply circuits in accordance with the invention may be used with any type of industrial load, and are not restricted to use with DC or AC motors or fans. Thus, the invention is applicable to any large drive which operates for a large percentage of the time, but which stops occasionally, especially those with a small speed variation, such as for example very large electrically driven compressors, fans, wind tunnels, air conditioning drives or water pumps.

## Claims

1. Power supply circuit for a load (1), comprising a power converter (2) connected in series between an AC supply and the load, the converter (2) having semiconductors (10-15) to switch the AC supply at various phase angles, thereby to supply power to the load, and a capacitance (3) connected to the AC supply to generate leading reactive power to counteract lagging reactive power generated by the power converter when the load is powered, **characterised by** an inductance (21) selectively connectable across the output of the power converter (2) in parallel with the load (1) to generate lagging reactive power to counteract the leading reactive power generated when the load is not powered.

2. Power supply circuit as claimed in Claim 1, including a circuit for controlling the semiconductors so that the lagging reactive power generated when the reactive means is connected balances the leading reactive power generated by the capacitive means.

3. Power supply circuit as claimed in claim 1 or claim 2, in which the power converter employs thyristors.

4. Power supply circuit as claimed in Claim 3, in which the thyristors are connected to convert the AC supply to DC, and the reactive means is connected in parallel with the load.

5. Power supply circuit as claimed in Claim 3, in which the thyristors are connected to convert AC at one frequency to AC at another frequency and the reactive means is connected between two phases of a three phase supply to an AC load or between one phase of such a supply and ground.

6. Power supply circuit as claimed in Claim 3, in which the power converter includes a converter for converting AC to DC, and an inverter for converting the DC back to AC, and the reactive means is connected between the converter and the inverter thyristor circuits.

7. A power supply circuit as claimed in any one of claims 1 to 6 connected to a load and supplying power to this load.

8. A power supply circuit as claimed in any one of claims 1 to 6 connected to a mine winder motor or mine ventilation fan and supplying power to it.

## Patentansprüche

1. Stromversorgungseinheit für eine Last (1), wobei die Stromversorgungseinheit einen Stromwandler (2), der in Reihe zwischen einer Wechselstromversorgung und der Last verbunden ist, und eine Kapazität (3) aufweist, die mit der Wechselstromversorgung verbunden ist, um eine voreilende Blindleistung zu erzeugen, um der nacheilenden Blindleistung entgegenzuwirken, die von dem Stromwandler erzeugt wird, wenn die Last mit Strom versorgt wird, wobei der Wandler (2) Halbleiterbauelemente (10-15) aufweist, um die Wechselstromversorgung bei unterschiedlichen Phasenwinkeln zu schalten, wodurch der Last ein Strom zugeführt wird,
**gekennzeichnet durch**
eine Induktivität (21), die wahlweise mit dem Ausgang des Stxomwandlers (2) parallel zu der Last (1) verbindbar ist, um eine nacheilende Blindleistung zu erzeugen, die der voreilenden Blindleistung entgegenwirkt, welche erzeugt wird, wenn die Last nicht mit Strom versorgt wird.

2. Stromversorgungseinheit nach Anspruch 1, die eine Schaltung aufweist, um die Halbleiterbauelemente so zu steuern, daß die nacheilende Blindleistung, die erzeugt wird, wenn die Blindleistungseinrichtung verbunden ist, die voreilende Blindleistung ausgleicht, die von der Kapzitätseinrichtung erzeugt wird.

3. Stromversorgungseinheit nach Anspruch 1 oder Anspruch 2, bei der der Stromwandler Thyristoren verwendet.

4. Stromversorgungseinheit nach Anspruch 3, bei der die Thyristoren verbunden sind, um den zugeführten Wechselstrom in Gleichstrom umzuwandeln, und bei der die Blindstromeinrichtung parallel zu der Last verbunden ist.

5. Stromversorgungseinheit nach Anspruch 3, bei der die Thyristoren so verbunden sind, daß sie Wechselstrom mit einer Frequenz in Wechselstrom mit einer anderen Frequenz umwandeln, und bei der die Blindleistungseinrichtung zwischen zwei Phasen einer Stromversorgung mit drei Phasen für eine Wechselstromlast oder zwischen einer Phase einer solchen Stromversorgung und Erde verbunden ist.

6. Stromversorgungseinheit nach Anspruch 3, bei der der Stromwandler einen Wandler zum Wandeln von Wechselstrom in Gleichstrom und einen Inverter zum Wandeln von Gleichstrom zurück in Wechselstrom aufweist, und bei der die Blindstromeinrichtung zwischen dem Wandler und den invertierenden Thyristorschaltungen verbunden ist.

7. Stromversorgungseinheit nach einem der Ansprüche 1 bis 6, die mit einer Last verbunden ist und zu dieser Last Strom zuführt.

8. Eine Stromversorgungseinheit nach einem der Ansprüche 1 bis 6, die mit einem Fördermaschinenmotor oder Bergwerkentlüfter verbunden ist und zu diesem Strom zuführt.

## Revendications

1. Circuit d'alimentation en énergie destiné à une charge (1), comprenant un convertisseur de puissance (2) connecté en série entre une alimentation en courant alternatif et la charge, le convertisseur (2) comportant des semi-conducteurs (10-15) pour commuter l'alimentation en courant alternatif dans différents angles de phases, alimentant ainsi la charge en énergie, et une capacité (3) connectée à l'alimentation en courant alternatif pour produire une puissance réactive en avance afin de contrecarrer la puissance réactive en retard produite par le convertisseur de puissance lorsque la charge est alimentée, **caractérisé par** une inductance (21) pouvant être connectée de façon sélective sur la sortie du convertisseur de puissance (2) en parallèle à la charge (1) pour générer la puissance réactive en retard afin de contrecarrer la puissance réactive en avance produite lorsque la charge n'est pas alimentée.

2. Circuit d'alimentation en énergie selon la revendication 1, comprenant un circuit pour commander les semi-conducteurs de telle sorte que la puissance réactive en retard produite lorsque les moyens réactifs sont connectés, équilibre la puissance réactive en avance produite par les moyens capacitifs.

3. Circuit d'alimentation en énergie selon la revendication 1 ou la revendication 2, dans lequel le convertisseur de puissance fait usage de thyristors.

4. Circuit d'alimentation en énergie selon la revendication 3, dans lequel les thyristors sont connectés pour convertir le courant alternatif en courant continu, et les moyens réactifs sont connectés en parallèle avec la charge.

5. Circuit d'alimentation en énergie selon la revendication 3, dans lequel les thyristors sont connectés pour convertir le courant alternatif à une fréquence particulière en courant alternatif à une autre fréquence et les moyens réactifs sont connectés entre deux phases d'une alimentation à trois phases à une charge en courant alternatif ou entre une phase particulière d'une telle alimentation et la terre.

6. Circuit d'alimentation en énergie selon la revendication 3, dans lequel le convertisseur de puissance comprend un convertisseur pour convertir le courant alternatif en courant continu, et un onduleur pour convertir le courant continu de nouveau en courant alternatif, et les moyens réactifs sont connectés entre le convertisseur et les circuits thyristors onduleurs.

7. Circuit d'alimentation en énergie selon l'une quelconque des revendications 1 à 6, connecté à une charge et alimentant cette charge en énergie.

8. Circuit d'alimentation en énergie selon l'une quelconque des revendications 1 à 6, connecté à un moteur de machine d'extraction minière ou à un ventilateur de mine et alimentant le moteur ou le ventilateur en énergie.
